(19) Europäisches Patentamt / European Patent Office / Office européen des brevets

(11) **EP 3 259 048 B1**

(12) **EUROPEAN PATENT SPECIFICATION**

(45) Date of publication and mention
of the grant of the patent:
**31.10.2018 Bulletin 2018/44**

(51) Int Cl.:
**B01D 67/00** *(2006.01)* **B01D 69/12** *(2006.01)*
**C23C 18/16** *(2006.01)*

(21) Application number: **16704592.1**

(22) Date of filing: **11.02.2016**

(86) International application number:
**PCT/EP2016/052884**

(87) International publication number:
**WO 2016/131697 (25.08.2016 Gazette 2016/34)**

(54) **MICROPOROUS MEMBRANE HAVING METALLIC COATING**

MIKROPORÖSE MEMBRAN MIT METALLISCHER BESCHICHTUNG

MEMBRANE MICRO-POREUSE COMPRÉNANT UN REVÊTEMENT MÉTALLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2015 EP 15155565**

(43) Date of publication of application:
**27.12.2017 Bulletin 2017/52**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **ALENCHERRY, Tinto, Johnichan**
**Whitefield Bangalore 560 066 (IN)**
• **MATTATHIL SUKUMARAN, Suma**
**Whitefield Bangalore 560 066 (IN)**
• **RAJANARAYANA, Venkataraghavan**
**Whitefield Bangalore 560 066 (IN)**

(74) Representative: **Reijns, Tiemen Geert Pieter**
**Unilever Patent Group**
**Olivier van Noortstraat 120**
**3133 AT Vlaardingen (NL)**

(56) References cited:
**EP-A1- 0 891 712** **WO-A1-2013/113068**
**JP-A- 2000 026 221**

• **SCHMIDT-LORENZ W: "ANTIMIKROBIELLE AUSRUESTUNG VON SCHWEBSTOFF-FILTERN AUS MIKROGLASFASERN DURCH BEDAMPFUNG MIT METALLISCHEM SILBER UND/ODER KUPFER BZW. IMPRAEGNIERUNG MIT SILBER- UND/ODER KUPFER-SALZEN. ÖANTIMICROBIAL TREATING OF PARTICULATE FILTERS MADE OF MICRO GLASS FIBRES BY COATING THERN WITH METALLIC SILVER AND", HYGIENE + MEDIZIN, MHP VERLAG, WIESBADEN, DE, vol. 7, 1 January 1982 (1982-01-01), pages 65-76, XP000576694, ISSN: 0172-3790**

## Description

### Field of the invention

The present invention relates to a microporous membrane more particularly the present invention relates to a membrane for removing viruses.

### Background of the invention

Water usually contains three types of impurities. The first is suspended or particulate matter; dissolved chemicals come next, followed by microorganisms. Bacteria, viruses and cysts are the most common microbial contamination in water and are responsible for millions of deaths each year. Water purification processes that successfully eliminate bacteria, viruses and cysts from water sources can be expensive. The purification methods include use of chemicals and radiation. It is desired to find effective, low cost technologies to eliminate this type of contamination.

Microporous membranes remove bacteria from water by size exclusion method. Microporous membrane removes bacteria and cyst even at high flow rates. However microporous membranes cannot remove viruses by size exclusion method. Viruses being smaller than the pore size of microporous membrane easily pass through the pores of the membrane. These membranes can be used even in the absence of applied pressure or electricity and also in the gravity kind of filtration devices. It is therefore desirable that the microporous membrane can be used to remove viruses in addition to bacteria.

Copper has long been identified with antiviral properties. Copper has been used to kill viruses by prolonged contact of the water to be purified with copper containing surface. However when high flow rates of water and high water flux are required like in a point of use purification device, use of copper for killing viruses are not known.

Non-metallic surface like a microporous membrane may be provided with a deposit of metal for example copper by known methods. Conventionally plating, vacuum-evaporating and sputtering methods are used to simply attach metal to a non-metallic surface. In the metallised surface formed by these methods, the bond strength is weak between the surface and the metallic layer, the metallic layer easily peels off from the surface.

One solution to this problem is disclosed in US5510195A (Sano et al., 1996) which relates to a porous resin membrane having a metallic layer chemically bonded to a porous resin. The resin is etched with high concentration alkali solution or a high concentration solution of chromic acid and sulphuric acid, a high concentration solution of sulphuric acid and nitric acid, or a solution of ammonium hydrogen fluoride and nitric type of resin to chemically bond the metal to the resin.

WO2013/113068 A1 (Nano-Nouvelle Pty. Ltd.) discloses a method for depositing a metal containing material onto a porous substrate. The method of depositing a thin uniform coating of metal on the porous substrate involves providing a coating of a compound containing at least a metal and oxygen onto a porous substrate and then forming a seed coating that is substantially free of precious metal and then applying the metal containing material to the seed layer.

EP0891712 A1 (Biopolymerix, Inc. 1999) discloses a filter comprising a substrate having immobilized thereon an antimicrobial agent that prevents bacterial grow-through while maintaining high flow rates of aqueous solution. It further discloses a process of electroless coating of silver onto a polyethersulfone membrane and includes the step of using acidic tin chloride solution followed by treatment with sodium tartrate solution to provide a silver coating on the membrane.

The present inventors have found that the etching step alters the membrane characteristics and drastically affects pore size distribution of the membrane. It is therefore desired to provide a method of preparing a microporous membrane having a well adhering metallic deposit without requiring an etching step and a microporous membrane which still provides a well adhering metallic deposit without altering the pore size distribution of membrane.

It is thus an object of the present invention to provide a microporous membrane having improved filtration characteristics.

It is a further object of the present invention to provide uniform and well adhering metallic layer on a porous substrate.

It is yet another object of the present invention to provide a microporous membrane having a copper layer without affecting the porosity of the membrane.

It is yet another object of the present invention to provide a microporous membrane which provides high flux and high flow rates at low pressure drops.

The present inventors have surprisingly found that uniform and well adhering metallic copper on a porous substrate can be provided without an etching step when a surface of a polymeric porous substrate has a metallic silver coating and a metallic copper coating overlaying the silver coating. It was further found that the filtration characteristics of the disclosed microporous membrane remained unaltered. It was further found that when the microporous membrane of the present invention is used in water filtration the copper leaching into the water is within the acceptable limits.

**Summary of the invention**

According to a first aspect disclosed is a microporous membrane having a polymeric substrate said substrate carrying a coating comprising metallic silver adhering to a surface of the substrate and a metallic copper coating overlaying the metallic silver.

According to a second aspect disclosed is a method for preparing a microporous membrane according to the first aspect of the invention comprising the steps of:

(i) contacting a porous polymeric substrate with an aqueous solution of acidic tin based compound to sensitise the substrate surface;
(ii) treating the sensitised substrate with an alkaline solution of a salt of silver to provide a coating comprising metallic silver adhering to a surface of the substrate;
(iii) rinsing the substrate carrying a coating comprising metallic silver with deionised water;
(iv) depositing metallic copper from an aqueous electroless plating bath to overlay the coating comprising metallic silver.

According to a third aspect of the present invention disclosed is a membrane of the first aspect obtainable by a process of the second aspect.

According to a fourth aspect of the present invention disclosed is a water purification device having a membrane of the first or third aspect.

According to a further aspect of the present invention disclosed is a use of a membrane of the first or third aspect for removing at least log 2 bacteria, viruses or cysts from water to be purified, preferably atleast log 4 viruses from water to be purified.

According to a further aspect of the present invention disclosed is a use of a membrane of the first or third aspect for delivering purified water at flow rates of 100 to 1000 mL/minute.

Throughout the description, the term "log reduction" as used herein means a 10-fold or 90% reduction in the number of viable microorganisms. By "2 log" reduction it is meant that the number of viable bacteria is reduced by 9.9%.

**Detailed description of the invention**

Microporous Membrane

Disclosed microporous membrane includes a polymeric substrate, a coating having metallic silver and a coating of metallic copper.

Average pore size as used herein refers to the pore size represented by maximum number of pores on the membrane and is measured using mercury porosimetry.

Preferably disclosed microporous membrane has an average pore size of less than about 100 micrometers. More preferably the average pore size is 0.1 to 0.5 micrometres. Preferably the membrane has pores of a size which is not less than 0.15 micrometers more preferably not less than 0.2 and still more preferably not less than 0.25 micrometers however the pores are of a size such that it is preferably not more than 0.45 micrometers, more preferably not more than 0.35 micrometers and still more preferably not more than 0.30 micrometers in diameter.

As used herein, the term porosity refers to a measure of the empty spaces in the microporous membrane and is the fraction of the total void spaces in the membrane over total volume of the membrane, usually expressed in percentage between 0 and 100.

Preferably the porosity of the disclosed membrane is from 30 to 80%. Preferably disclosed membrane has a porosity of greater than 40% by volume more preferably greater than 45% still more preferably greater than 50% and more preferably greater than 55% by volume. Preferably the membrane has a porosity not more than 77% still more preferably not more than 65% and yet more preferably not more than 60%.

Porosity of a membrane is measured gravimetrically. The porosity is determined as follows. The weight $(W_i)(g)$ of the membrane after it has been saturated with water, and the weight $(W_2)(g)$ of the membrane after it has been dried are individually measured. The porosity of the porous membrane is calculated from the weights $W_1$ and $W_2$ by the following formula, assuming that the density of water is 1.0 g/ml:

Porosity is given by the formula:

$$\text{Porosity } (\varepsilon) = \frac{(W_1 - W_2)/D_w}{(W_1 - W_2)/D_w + W_2/D_p}$$

Where $W_1$ = weight of the wet membrane
$W_2$ = weight of the dry membrane
$D_w$ = density of water
$D_p$ = density of water

Disclosed microporous membrane is not limited to flat sheets and includes shapes such as rods, tubes, spheres all of which can be effective copper coated according to the present invention. Hollow fibre membrane is highly preferred.

Polymeric substrate

Disclosed membrane includes a polymeric substrate preferably selected from polyamides, polyacrylonitriles, polysulfones, polyethersulfone, polyvinylidenefluoride or a mixture thereof. It is highly preferred that the polymeric substrate is polysulfones or polyethersulfone.

Metallic silver coating

Disclosed microporous membrane includes a coating of metallic silver adhering to a surface of the polymeric substrate.
Metallic silver coating of the present invention is preferably in the form of a discontinuous layer. As used herein, "discontinuous" means that the metallic coating is disposed as islands of particles or agglomerates thereof, surrounded by uncoated areas. The majority of the silver metal particles are usually elemental metal particles, although other metallic particles such as oxides are also contemplated. More preferably, the metallic silver coating is adhering to the entire surface of the polymeric substrate.
Preferably the metallic silver coating is in the form of nanoparticles. It is preferred that metallic silver coating is adhered to the substrate by physisorption.

Metallic copper coating

Disclosed microporous membrane includes a metallic copper coating overlaying the metallic silver.
It is preferred that the sum total of the average thickness of the metallic copper coating and the metallic silver coating is 0.1 to 3% of the thickness of membrane.
Average thickness of the coating of metallic silver and metallic copper may be analyzed by scanning electron microscopy followed by image analysis using Image J software. The diameter of substrate without the metallic silver and metallic copper coating as well as the diameter of substrate with the metallic silver and metallic copper coating is compared for determining the thickness.
Preferably the ratio of the amount of the metallic copper coating to the amount of the metallic silver coating is at least 1.

Process for preparing the porous membrane according to the present invention

According to a second aspect of the present invention disclosed is a method for preparing a microporous membrane according to the first aspect of the invention comprising the steps of (i) contacting a porous polymeric substrate with an aqueous solution of acidic tin based compound to sensitise the substrate surface; (ii) treating the sensitised substrate with an alkaline solution of a salt of silver to provide a coating comprising metallic silver adhering to a surface of the substrate; (iii) rinsing the substrate carrying a coating comprising metallic silver adhering to a surface of the substrate with deionised water; (iv) depositing metallic copper from an aqueous electroless plating bath to overlay the coating comprising metallic silver.
In accordance with the present invention, the process for preparing the microporous membrane includes preferably as a first step cleaning the porous polymeric substrate with deionised water. Preferably the cleaning step includes rinsing the substrate with deionized water at room temperature for 10 to 15 minutes.
It is highly preferred that the polymeric substrate is not treated with an etching solution still preferably the polymeric substrate is not treated with an etching solution having a high concentration alkali solution or a high concentration solution of chromic acid and sulphuric acid, a high concentration solution of sulphuric acid and nitric acid, or a solution of ammonium hydrogen fluoride.
In accordance with the present invention, the process includes initially sensitising the substrate which involves contacting a porous polymeric substrate with an aqueous solution of acidic tin based compound. Preferably the tin based compound is stannous chloride other stannous tin compounds such as stannous fluoborate and stannous sulphate may also be suitable for sensitizing the substrate. Preferably, the substrate is sensitised by treating it with a solution having stannous chloride and hydrochloric acid at room temperature for 20 to 25 minutes. Preferably the concentration of hydrochloric acid is 38%.

Preferably the sensitised substrate is subsequently rinsed in deionized water. Preferably chloride ions are completely removed prior to the subsequent step to prevent contamination and loss of effectiveness of the accumulation of subsequent materials.

The next step involves activating the substrate. This step involves treating the sensitised substrate with an alkaline solution of a salt of silver to provide a coating comprising metallic silver adhering to a surface of the substrate. The salt of silver which may be used for activating is preferably selected from silver nitrate, silver fluoride or silver acetate. Preferably the activation is carried by dipping the sensitised substrate in a solution having silver nitrate and ammonium hydroxide at room temperature for 20 to 25 minutes. The strength of ammonium hydroxide is preferably 28 to 30%.

The next step involves rinsing the substrate carrying a coating comprising metallic silver adhering to a surface of the substrate with deionised water. Preferably the rinsing is carried out with deionized water for 5 to 10 minutes.

The next step involves depositing metallic copper from an aqueous electroless plating bath to overlay the coating comprising metallic silver. The electroless plating bath preferably includes a salt of copper, reducing agent, complexing agent and a pH increasing agent.

Preferably the salt of copper is copper sulphate. The concentration of the copper sulphate in the electroless plating bath is preferably from 15 grams per liter to 100 grams per liter. Salts other than copper sulphate may be used which contain either cupric or cuprous ions if they are used on the basis of equivalent mols of copper per liter of solution. Among these salts which are suitable for use in place of copper sulphate are cupric and cuprous chloride, cupric carbonate, cupric acetate and cupric and cuprous oxides.

Preferably the reducing agent is formaldehyde. Preferably a 37% aqueous solution of formaldehyde is used as a reducing agent at a concentration level of 20 mL per litre of the electroless plating bath. Reducing agents other than formaldehyde may be used which includes hydrazine or glyoxylic acid.

Preferably the complexing agent is potassium sodium tartarate. Preferably concentration of potassium sodium tartarate is at a level of 40 grams per litre of the electroless plating bath. The tartrate salts are preferably used as complexing agents, because of their economy but sodium citrate or gluconate may be substituted on a chemically equivalent basis. Other preferred complexing agents may be used which includes ethylenediamine tetraacetic acid or polyethylene glycol.

Preferably the pH increasing agent is sodium hydroxide. Preferably concentration of sodium hydroxide is at a level of 10 grams per litre of the electroless plating bath. pH changing agent other than sodium hydroxide may be used which includes potassium hydroxide or tetramethylammonium hydroxide. Potassium hydroxide may be used in place of sodium hydroxide on a chemically equivalent basis.

Preferably the electroless plating bath is maintained at room temperature and pH of the electroless plating bath ranges from 9.5 to 13, preferably from 10 to 12. It is highly preferred that the pH of the electroless plating bath is 12.

The critical relation which must be observed is that the pH must be adjusted so that there is a proper balance between the strength of the alkalinity of the solution and the amount of such complexing agent as may be present.

It is also important that the concentration of copper salt in the bath be kept below 0.4 mols and that there also be more copper ions in solution than potassium sodium tartarate on an equivalent basis. Under these conditions the bath will have a clouded appearance. In order for the deposition of copper to proceed at a reasonable speed it is necessary that the pH of the bath be at least 11.0 and that the equivalent concentration of the sodium or potassium hydroxide be at least 1.5 times that of the potassium sodium tartarate. It is also important that the mol concentration of the sodium hydroxide or potassium hydroxide should not exceed seven times the mol concentration of the potassium sodium tartarate.

Preferably after the plating step the membrane is rinsed with deionised water and dried at room temperature preferably for 2 hours.

Disclosed process for preparing the microporous membrane may be carried out in a batch mode or a continuous flow mode. When the preparation is in a batch mode the substrate is sequentially immersed in the solutions as described in the disclosed process preferably with agitation.

When the preparation process is a continuous flow mode, the solutions are sequentially flowed through the porous substrate for the desired time period. In a continuous flow mode solutions of higher concentrations are preferred for providing uniform copper depositions.

According to a third aspect of the present invention disclosed is a membrane of the first aspect obtainable by a process of the second aspect.

According to a fourth aspect of the present invention disclosed is a water purification device having a membrane of the first or third aspect.

According to a further aspect of the present invention disclosed is a use of a membrane of the first or third aspect for removing at least log 2 bacteria, viruses or cysts from water to be purified, preferably atleast log 4 viruses from water to be purified.

According to a further aspect of the present invention disclosed is a use of a membrane of the first or third aspect for delivering purified water at flow rates of 100 to 1000mL/minute.

**Examples**

Example 1: Preparation of a microporous membrane according to the present invention.

Materials Required

(i) Porous substrate: A pre-washed clean microporous polysulphone substrate (Para MF membrane) was taken. The substrate had a porosity of 50.1% and average pore size of 0.1 micrometer.
(ii) Sensitising solution: 10 grams of $SnCl_2.2H_2O$ was mixed with 40 mL of 37% hydrochloric acid and the final volume of the mixture was made to 1litre with deionised water.
(iii) Activation solution: 10 grams of silver nitrate was mixed with 10 mL of ammonium hydroxide and the final volume was made up to 1 litre with deionized water.
(iv) Electroless plating bath: 15 grams of $CuSO_4.5H_2O$, 40 grams of $C_4H_4KNaO_6.4H_2O$, 20 mL of formaldehyde (37% aqueous solution) and 10 grams of NaOH were mixed together and the final volume was made upto 1 litre with deionized water.

Preparation process

The pre-cleaned microporous polysulphone substrate was dipped in the sensitising solution maintained at 25°C and 1 atmospheric pressure for 20 minutes. The substrate was removed from the sensitizing solution and rinsed in deionized water for 5 minutes. In the next step, the substrate was immersed in the activation solution kept at 25°C and 1 atmospheric pressure for 20 minutes. The substrate was then removed from the activation solution and rinsed in deionized water for 5 minutes.
The substrate was next immersed in the electroless plating bath kept at 25°C and 1 atmospheric pressure for 20 minutes. The substrate was removed from the electroless plating bath and rinsed in deionized water for 20 minutes and later dried in a vaccum dessicator.

Example 2: Removal of virus from the water in a gravity fed purification device.

The biocidal efficacy of the microporous membrane of Example 1 is tested using *E.Coli* ATCC 10536 bacteria ($10^7$ log) and MS2 Bacteriophage Atcc 15597 ($10^5$ log) virus in a standard NSF-1 test water.
The membrane obtained from Example 1 is spiked with prepared test water containing bacteria and virus. Test water was fed to the membrane using a peristaltic pump (Cole-Palmer Masterflex L/S). The test water was allowed to flow through the membrane and when the flow through the membrane reached equilibration a sample of 2 litres of filtered water was collected. The collected sample was immediately treated with thiosulphate-thioglycolate (neutralizer) and analysed for bacterial and virus concentration using plate count method. Filtered water samples were collected and analysed when the flow rates through the membrane of Example 1 were maintained at 130mL/minute and 800mL/minute.
A control was also prepared by filtering water at a flow rate of 100mL/minute through a porous substrate without a coating of metallic silver and copper as disclosed in the present invention.
The experimental data is provided in Table 1.

Table 1

| Examples | flow rate of test water through the membrane (mL/minutes) | Bacteria Input count (Log) | Bacteria log removal | virus Input count(log) | Virus log removal | Copper level in output water after 24 hours (ppm) |
|---|---|---|---|---|---|---|
| Control | 100 | 7.28 | 7.28 | 5.46 | 0.81 | - |
| Example 1 | 130 | 6.92 | 6.92 | 5.47 | 5.47 | 0.5 |
| Example 1 | 800 | 6.92 | 6.92 | 5.47 | 5.47 | 0.5 |

The data in Table 1 clearly shows that when test water having bacteria and virus is filtered through the microporous membrane of the present invention (Example 1) it provides increased removal of viruses even at higher flow rates. Further the levels of copper leaching into the water are low. This clearly demonstrates that the present invention provides for a microporous membrane having a uniform metallic copper coating which is also well adhering.

**Claims**

1. A microporous membrane comprising a polymeric substrate said substrate carrying a coating comprising metallic silver adhering to a surface of the substrate and a metallic copper coating overlaying the metallic silver.

2. A membrane as claimed in claim 1 wherein the sum total of the average thickness of the metallic copper coating and the metallic silver coating is 0.1 to 3% of the thickness of membrane.

3. A membrane as claimed in claim 1 wherein the membrane has an average pore size of 0.1 to 0.5 micrometers.

4. A membrane as claimed in any one of the preceding claims wherein the polymeric substrate comprises polyamides, polyacrylonitriles, polysulfones, polyethersulfone, polyvinylidenefluoride or a mixture thereof.

5. A membrane as claimed in any one of the preceding claims wherein the porosity of the membrane is from 30 to 80% by volume of the membrane.

6. A method for preparing a microporous membrane as claimed in any one of the preceding claims comprising the steps of:

   (i) contacting a porous polymeric substrate with an aqueous solution of acidic tin based compound to sensitise the substrate surface;
   (ii) treating the sensitised substrate with an alkaline solution of a salt of silver to provide a coating comprising metallic silver adhering to a surface of the substrate;
   (iii) rinsing the substrate carrying a coating comprising metallic silver adhering to a surface of the substrate with deionised water;
   (iv) depositing metallic copper from an aqueous electroless plating bath to overlay the coating comprising metallic silver.

7. A method as claimed in claim 6 wherein the acidic tin based compound is selected from stannous chloride, stannous fluoborate or stannous sulphate.

8. A method as claimed in claim 6 wherein the salt of silver is selected from silver nitrate, silver fluoride or silver acetate.

9. A method as claimed in claim 6 wherein the electroless plating bath comprises a salt of copper selected from copper sulphate, cupric chloride, cuprous chloride, cupric carbonate, cupric acetate cupric oxide or cuprous oxide.

10. A method as claimed in any one of the preceding claims wherein the pH of the electroless plating bath ranges from 9.5 to 13, preferably from 10 to 12.

11. A membrane as claimed in any one of claims 1 to 5 obtainable by a process as claimed in claim 6 to 10.

12. A water purification device comprising a membrane as claimed in any one of claims 1 to 5 or 11.

13. Use of a membrane as claimed in claim 1 to 5 or 11 for removing at least log 2 bacteria, viruses or cysts from water to be purified.

14. Use of a porous membrane as claimed in claim 1 to 5 or 11 for delivering purified water at flow rates of 100 to 1000 mL/minute.

**Patentansprüche**

1. Mikroporöse Membran, umfassend ein polymeres Substrat, wobei das Substrat eine Beschichtung, umfassend metallisches Silber, das an einer Oberfläche des Substrats haftet, und eine metallische Kupferbeschichtung, die das metallische Silber überlagert, trägt.

2. Membran, wie im Anspruch 1 beansprucht, wobei die Gesamtsumme der durchschnittlichen Dicke der metallischen Kupferbeschichtung und der metallischen Silberbeschichtung 0,1 bis 3% der Dicke der Membran beträgt.

3. Membran, wie im Anspruch 1 beansprucht, wobei die Membran eine durchschnittliche Porengröße von 0,1 bis 0,5 Mikrometer aufweist.

4. Membran, wie in irgendeinem der vorhergehenden Ansprüche beansprucht, wobei das polymere Substrat Polyamide, Polyacrylnitrile, Polysulfone, Polyethersulfon, Polyvinylidenfluorid oder eine Mischung davon umfasst.

5. Membran, wie in irgendeinem der vorhergehenden Ansprüche beansprucht, wobei die Porosität der Membran von 30 bis 80 Volumen-% der Membran beträgt.

6. Verfahren zur Herstellung einer mikroporösen Membran, wie in irgendeinem der vorhergehenden Ansprüche beansprucht, umfassend die Schritte:

> (i) Inkontaktbringen eines porösen polymeren Substrats mit einer wässrigen Lösung einer auf Zinn basierenden sauren Verbindung, um die Substratoberfläche zu sensibilisieren,
> (ii) Behandeln des sensibilisierten Substrats mit einer alkalischen Lösung eines Silbersalzes, um eine Beschichtung zu liefern, die metallisches Silber umfasst, das an einer Oberfläche des Substrats haftet,
> (iii) Spülen des Substrats, das eine Beschichtung trägt, umfassend an einer Oberfläche des Substrats haftendes metallisches Silber, mit entionisiertem Wasser,
> (iv) Abscheiden metallischen Kupfers aus einem wässrigen stromlosen Plattierungsbad, um die metallisches Silber umfassende Beschichtung zu überlagern.

7. Verfahren, wie im Anspruch 6 beansprucht, wobei die auf Zinn basierende saure Verbindung aus Zinn (II)-chlorid, Zinn (II)-fluoborat oder Zinn (II)-sulfat ausgewählt ist.

8. Verfahren, wie im Anspruch 6 beansprucht, wobei das Silbersalz aus Silbernitrat, Silberfluorid oder Silberacetat ausgewählt ist.

9. Verfahren, wie im Anspruch 6 beansprucht, wobei das stromlose Plattierungsbad ein Kupfersalz umfasst, das aus Kupfersulfat, Kupfer (II)-chlorid, Kupfer (I)-chlorid, Kupfer (II)-carbonat, Kupfer (II)-acetat, Kupfer (II)-oxid oder Kupfer (I)-oxid ausgewählt ist.

10. Verfahren, wie in irgendeinem der vorhergehenden Ansprüche beansprucht, wobei der pH des stromlosen Plattierungsbades von 9,5 bis 13, vorzugsweise von 10 bis 12, reicht.

11. Membran, wie in irgendeinem der Ansprüche 1 bis 5 beansprucht, erhältlich durch ein Verfahren, wie im Anspruch 6 bis 10 beansprucht.

12. Wasserreinigungsvorrichtung, umfassend eine Membran, wie in irgendeinem der Ansprüche 1 bis 5 oder 11 beansprucht.

13. Verwendung einer Membran, wie im Anspruch 1 bis 5 oder 11 beansprucht, zum Entfernen von wenigstens log 2-Bakterien, Viren oder Zysten aus zu reinigendem Wasser.

14. Verwendung einer porösen Membran, wie im Anspruch 1 bis 5 oder 11 beansprucht, zum Erhalt gereinigten Wassers bei Fließgeschwindigkeiten von 100 bis 1000 ml/Minute.

**Revendications**

1. Membrane microporeuse comprenant un substrat polymère ledit substrat supportant un revêtement comprenant de l'argent métallique adhérant à une surface du substrat et un revêtement de cuivre métallique recouvrant l'argent métallique.

**2.** Membrane selon la revendication 1, dans laquelle la somme totale de l'épaisseur moyenne du revêtement de cuivre métallique et du revêtement d'argent métallique est de 0,1 à 3 % de l'épaisseur de membrane.

**3.** Membrane selon la revendication 1, dans laquelle la membrane présente une taille moyenne de pore de 0,1 à 0,5 micromètres.

**4.** Membrane selon l'une quelconque des revendications précédentes, dans laquelle le substrat polymère comprend des polyamides, polyacrylonitriles, polysulfones, polyéthersulfone, poly(fluorure de vinylidène) ou un mélange de ceux-ci.

**5.** Membrane selon l'une quelconque des revendications précédentes, dans laquelle la porosité de la membrane est de 30 à 80 % en volume de la membrane.

**6.** Procédé de préparation d'une membrane microporeuse selon l'une quelconque des revendications précédentes comprenant les étapes de :

(i) mise en contact d'un substrat polymère poreux avec une solution aqueuse de composé à base d'étain acide pour sensibiliser la surface de substrat ;
(ii) traitement du substrat sensibilisé avec une solution alcaline d'un sel d'argent pour fournir un revêtement comprenant de l'argent métallique adhérant à une surface du substrat ;
(iii) rinçage du substrat supportant un revêtement comprenant de l'argent métallique adhérant à une surface du substrat avec de l'eau déionisée ;
(iv) dépôt de cuivre métallique à partir d'un bain de placage chimique aqueux pour recouvrir le revêtement comprenant de l'argent métallique.

**7.** Procédé selon la revendication 6, dans lequel le composé à base d'étain acide est choisi parmi le chlorure stanneux, fluoroborate stanneux ou sulfate stanneux.

**8.** Procédé selon la revendication 6, dans lequel le sel d'argent est choisi parmi le nitrate d'argent, fluorure d'argent ou acétate d'argent.

**9.** Procédé selon la revendication 6, dans lequel le bain de placage chimique comprend un sel de cuivre choisi parmi le sulfate de cuivre, chlorure cuprique, chlorure cupreux, carbonate cuprique, acétate cuprique, oxyde cuprique ou oxyde cupreux.

**10.** Procédé selon l'une quelconque des revendications précédentes, dans lequel le pH du bain de placage chimique est de 9,5 à 13, de préférence de 10 à 12.

**11.** Membrane selon l'une quelconque des revendications 1 à 5 pouvant être obtenue par un procédé selon la revendication 6 à 10.

**12.** Dispositif de purification d'eau comprenant une membrane selon l'une quelconque des revendications 1 à 5 ou 11.

**13.** Utilisation d'une membrane selon la revendication 1 à 5 ou 11 pour éliminer au moins log 2 bactéries, virus ou kystes d'eau à purifier.

**14.** Utilisation d'une membrane poreuse selon la revendication 1 à 5 ou 11 pour fournir de l'eau purifiée à des débits de 100 à 1 000 mL/minute.

**EP 3 259 048 B1**

**Patent documents cited in the description**

- US 5510195 A, Sano
- WO 2013113068 A1
- EP 0891712 A1